(19) Europäisches Patentamt European Patent Office Office européen des brevets

(11) **EP 4 776 532 A1**

(12) **EUROPEAN PATENT APPLICATION**

(43) Date of publication:
**15.07.2026 Bulletin 2026/29**

(21) Application number: **26150588.7**

(22) Date of filing: **07.01.2026**

(51) International Patent Classification (IPC):
**H04B 17/21** (2015.01)     H04B 17/318 (2015.01)

(52) Cooperative Patent Classification (CPC):
**H04B 17/21;** H04B 17/318

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.01.2025 EP 25151027**

(71) Applicant: **EM Microelectronic-Marin SA 2074 Marin-Epagnier (CH)**

(72) Inventors:
• **HORMATI, Ali**
  **1023 Crissier (CH)**
• **ALBINET, Xavier**
  **06330 Roquefort Les Pins (FR)**
• **BALTOLU, Anthony**
  **06200 Nice (FR)**
• **GHARIBDOUST, Kiarash**
  **1027 Lonay (CH)**

(74) Representative: **ICB SA Faubourg de l'Hôpital, 3 2001 Neuchâtel (CH)**

(54) **RECEIVED SIGNAL STRENGTH INDICATOR (RSSI) COMPENSATION AND CALIBRATION PROCEDURE**

(57) The present disclosure relates to a system and a method for generating a compensated received signal strength indicator (RSSI) value that corresponds to a radio frequency (RF) signal and a calibration method for such a system, comprising temperature compensation data for the amplification of RF induced voltages.

## Fig. 3

**(Cont. next page)**

EP 4 776 532 A1

# Fig. 4

## Description

Technical field

The present disclosure relates to RSSI functionality of systems and devices in the field of wireless communication systems.

Background of the invention

In a typical wireless communication system, a Received Signal Strength Indicator (RSSI) is an important building block which serves as key role in numerous applications. As described in the IEEE 802.11 wireless standard, RSSI is used to measure the signal level (or power) at the receiver chain input and this measurement can be used in numerous ways including controlling the receiver gain, adjusting the transmitted power, monitoring the link condition, and more recently for sensor positioning in wireless sensor networks.

Since RSSI accuracy plays the major role in effectiveness of the employed applications, a well-controlled and accurate RSSI is a critical specification for a wireless system and there have been many papers and patents published about RSSI concept and its accuracy.

These applications require a compact low-power solution which is robust across all temperature and can compensate any process or voltage variation (PVT resilient RSSI solution). This requires a very complicated design and/or employment of semiconductor technology with a very well controlled process accuracy and repeatability, which leads to a very costly design. For example, for the implementation of such systems for keyfobs for automotive applications, with a zero-defect manufacturing requirement, it is not possible to guarantee such a spec by relying on high precision design and design margins. As such, a comprehensive production test is required and the RSSI chain parameters (i.e., Gain, offset and ADC code) should be measured and stored in a look-up table (LUT) inside a non-volatile memory (NVM) for all the temperatures. This needs a large memory size and several measurements and read/write at different temperature (for example, M-bit LUT for attenuator plus N bit LUT for ADC at each measured temperature).

In US 2017/288795 A1 an interpolating method for the RSSI chain to reduce the look-up table size is suggested. However, such a method has a limitation in accuracy and cannot fully compensate process and temperature variation for the RSSI accuracy.

According to other proposed solutions in the field, the dedicated RSSI chain may comprise a multi-stage amplifier with a fixed gain along with the overflow detector to calculate the input signal range without saturating the output of the amplifier. Further, offset is calibrated at the RSSI measurement startup by choosing "00" for the multiplexer input. Such a solution requires extra area for the RSSI chain and the temperature compensation is not done, hereby impacting the RSSI accuracy over temperature variations.

It is therefore a goal of the present disclosure to improve accuracy of RSSI devices despite noise, temperature and non-linearity effects, while solving the above-mentioned problems. Besides, the invention aims to ensure a good accuracy of the RSSI estimation without compromising the overall compactness of the system.

Summary of the invention

In one aspect of the current disclosure there is provided a system for generating a signal strength indicator value of a received radio frequency signal, said system comprising:

- an RF antenna configured to generate an induced voltage from the received radio frequency signal;

- an RF signal chain unit comprising an automatic gain control unit configured to generate an analog amplitude signal derived from the induced voltage; said automatic gain control unit comprising:

  ○ at least an amplifying unit with a controllable gain configured to amplify the induced voltage;

  ○ a compensation unit configured to determine a status of saturation or underperformance of the at least amplifying unit ;

- a digital processing unit configured to calculate a gain value from a prestored database according to the status of saturation or underperformance of the at least amplifying unit and configured to generate a control signal to the at least amplifying unit to adapt its gain to the calculated gain value;

- a Received Signal Strength Indicator unit configured to receive the analog amplitude signal and to generate a RSSI value based on the analog amplitude signal.

According to a particular aspect of the invention, the system comprises a plurality of RF Receivers, wherein each RF receiver comprises a RF antenna , and wherein each RF antenna is connected to a dedicated RF signal chain unit , and wherein the Received Signal Strength Indicator unit comprises a multiplexer configured to receive each analog amplitude signal generated by the each RF signal chain unit.

According to a particular aspect of the invention, the system has a first configuration for generating a signal strength indicator value and a second configuration for processing telegram signals. Said system comprises a controllable current source to supply a bias current for the at least amplifying unit. The current source is configurable by the digital processing unit according to the selected configuration such as when the second configuration is selected the bias current is reduced compared to the first configuration.

According to a particular aspect of the invention, the compensation unit is a comparator configured to detect if the analog amplitude signal is between a first threshold and a second threshold.

According to a particular aspect of the invention, the automatic gain control unit comprises a rectifier configured to extract the envelop of the output signal of the at least an amplifying unit to generate the analog amplitude signal.

According to a particular aspect of the invention, said rectifier generates periodic ripple noise at a first period. The Received Signal Strength Indicator unit comprises an analog-digital convertor configured to sample the analog amplitude signal according to a sampling period equal to N times the first period; N being an integer.

According to a particular aspect of the invention, the system further comprises a thermal detector configured to measure a RSSI unit temperature. The digital processing unit being configured to:

- receive the RSSI unit temperature;

- determine a gain value and an offset value from the prestored database at the received RSSI unit temperature;

- estimate the signal strength indicator value using the determined gain value; the determined offset value and an average of analog-digital convertor readings.

According to a particular aspect of the invention, the step of determining the gain value comprises a linear interpolation operation between a first gain value at a first temperature prestored in the database and a second gain value at a second temperature prestored in the database; the second temperature being higher than the first temperature.

According to a particular aspect of the invention, the step of determining the offset value comprises a parabolic interpolation operation between a first ratio offset by gain at a first temperature prestored in the database and a second ratio offset by gain at a second temperature prestored in the database; the second temperature being higher than the first temperature.

The invention further relates to a method of calibration of a system according to the invention, wherein the method comprises:

- generating a temperature list comprising a plurality of temperature values and a gain decoding list comprising a plurality of nominal gain values;

- selecting a temperature from the temperature list and setting the RSSI unit to the selected temperature and selecting a gain from the gain decoding list;

For each temperature value and for each nominal gain value the method further comprises the following steps:

- applying at least two input RF signals to the RF antenna ; each of the input RF signals having an amplitude enabling an analog amplitude signal between a first threshold and a second threshold ;

- for each input RF signal, measuring the analog amplitude signal ;

- extrapolating a linear variation of the analog amplitude signal function of input RF signals amplitude to determine an estimated gain value and an estimated offset value;

- storing the estimated gain value and the estimated value.

According to a particular aspect of the invention, the method further comprising the following step for a predetermined nominal gain value:

- performing a linear fitting operation between a first estimated gain value at a first temperature and a second estimated gain value at a second temperature; the second temperature being higher than the first temperature.
- storing the obtained linear function for a predetermined temperature range to obtain temperature compensated gain database.

According to a particular aspect of the invention, the method further comprising the following step for a predetermined nominal gain value:

- performing a parabolic fitting operation between a first estimated ratio offset by gain at a first temperature and a second estimated ratio offset by gain at a second temperature; the second temperature being higher than the first temperature.

- storing the obtained parabolic function for a predetermined temperature range to obtain temperature compensated offset database.

According to a particular aspect of the invention, the parabolic fitting operation is based on in that the derivative of the ratio with respect to temperature is equal to 0 at a temperature between -30°C and -40°C.

According to a particular aspect of the invention, the temperature list consists of a first temperature between 18°C and 28°C and a second temperature higher than the first temperature.

Brief description of the drawings

In the following, embodiments of the current disclosure are illustrated by making reference to the drawings, in which:

- Figure 1 shows a simplified Received Signal Strength Indicator according to the prior art.

- Figure 2 shows a further simplified Received Signal Strength Indicator chain block according to the prior art.

- Figure 3 shows a system according to an embodiment of the present disclosure.

- Figure 4 shows a RF Signal Chain unit according to an embodiment of the present disclosure.

- Figure 5 shows a schematic workflow of a method according to an embodiment of the present disclosure.

Detailed description of the invention

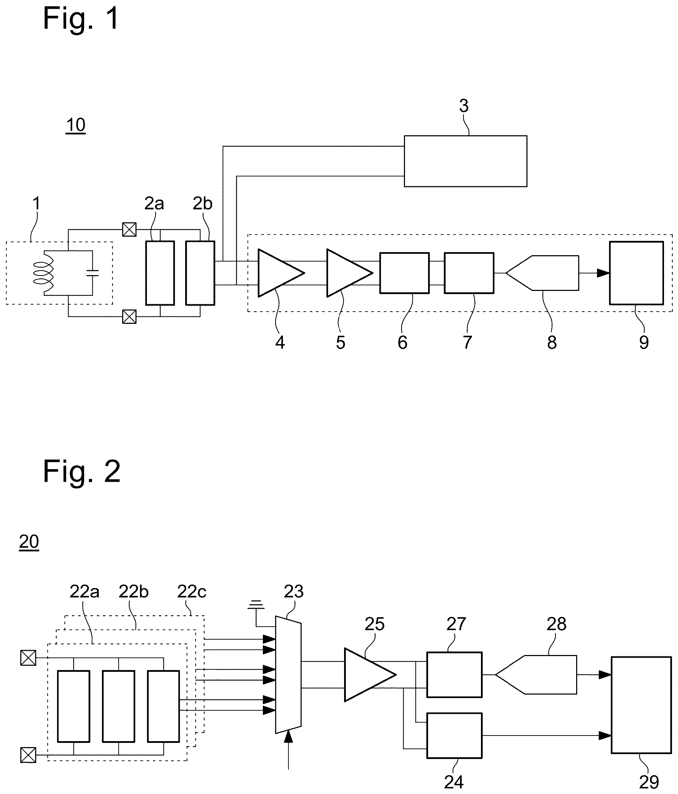

In Figure 1, a simplified Received Signal Strength Indicator (RSSI) 10 according to the prior art is shown. Figure 1 shows a simplified block diagram of a RSSI block according to the prior art. The input signal from radio frequency (RF) antenna 1 is provided to the chip and a dedicated RSSI chain is designed so that it can accurately set the required gain and amplify the received signal to the desired level for peak-detectors.

The input signal from the RF antenna 1 goes through an electrostatic discharge (ESD) protection unit 2a and a M-bits attenuator 2b before entering the dedicated RSSI block chain shown in dotted lines together with the signal received from RF Receiver Chain unit 3, delivering the Rx telegram reception chain. Once the signal is in the RSSI block chain, Low Noise Amplifier 4, Variable Gain Amplifier 5 and Low Pass Filter 6 modulate, i.e. amplify and filter, the signal before delivering it to a peak-detector output 7, which is a DC voltage, delivers in turn to an analog-to-digital (ADC) converter 8 with sufficient resolution (N bits of resolution) and the digital output of ADC is processed by digital signal processor (DSP) engine 9 to calculate the signal strength based on the ADC measurement.

As explained already, this setting requires a very complicated design and/or employment of semiconductor technology with a very well controlled process accuracy and repeatability, which leads to a very costly design and comprehensive production tests, wherein the RSSI chain parameters (i.e., Gain, offset and ADC code) should be measured and stored in look-up table (LUT) inside a non-volatile memory (NVM) for all the temperatures. This needs a large memory size and several measurements and read/write at different temperature (for example, M-bit LUT for attenuator plus N bit LUT for ADC at each measured temperature).

In Figure 2 a further simplified Received Signal Strength Indicator chain block according to the prior art is shown. According to figure 2, a dedicated RSSI chain is shared among three channels (reception on 22a, 22b, 22c at the same time) through a multiplexer 23. The dedicated RSSI chain uses a multi-stage amplifier 25 with a fixed gain along with the overflow detector 24 to calculate the input signal range without saturating the output of the amplifier. Analogously as in previous example, the amplifier output is input to a peak detector 27 which in turn delivers to an analog-to digital (ADC) converter 28, wherein the output of ADC converter 28 is processed by DSP engine 29. In this case, as explained before, offset is calibrated at the RSSI measurement startup by choosing "00" for the multiplexer input. This embodiment requires extra area for the RSSI chain and the temperature compensation is not done, hence, the RSSI accuracy can be impacted across the temperature ranges for intended use.

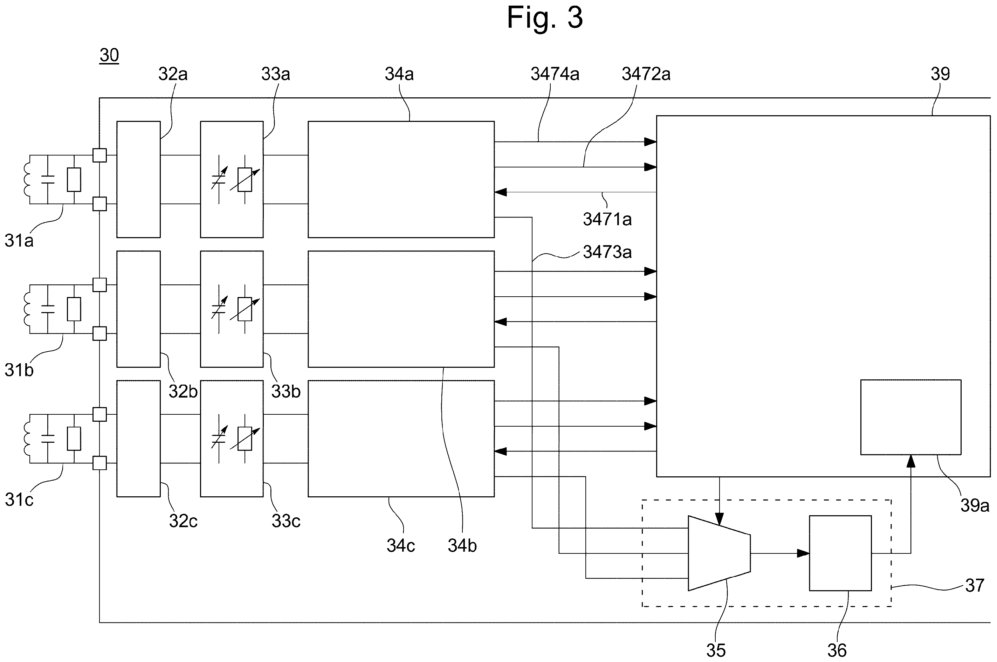

Figure 3 shows a system 30 according to an embodiment of the present disclosure. According to this embodiment, system 30 comprises three channel RF Receivers, wherein each is formed by a RF antenna 31, connected to an electrostatic discharges (ESD) unit 32, which in turn is connected to a Q-factor adjustment unit 33 and the latter is then connected to a RF Signal Chain unit 34. The RF antenna generates an induced voltage, which is, directly or indirectly, received by the RF signal chain unit 34.

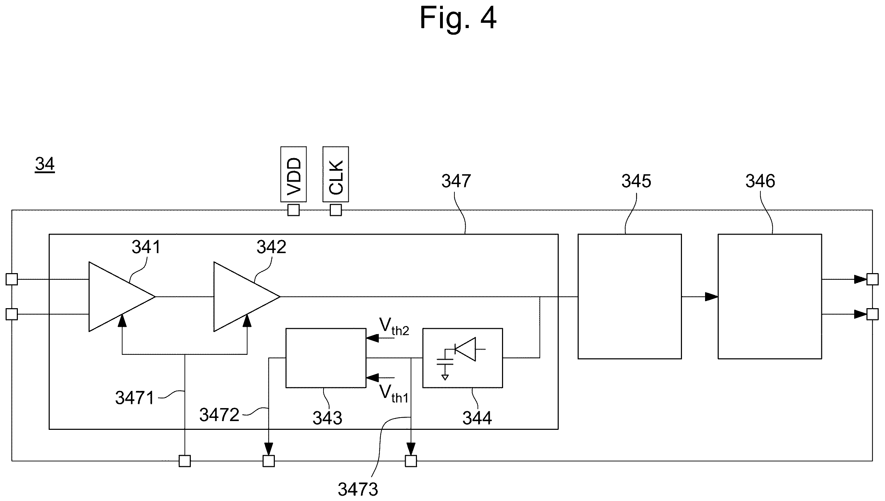

System 30 further comprises a Received Signal Strength Indicator (RSSI) unit 37 and a digital processing unit 39, wherein the digital processing unit 39 further comprises a Digital RSSI processing unit 39a. As it will be further described below with reference to Figure 4, RF Signal Chain 34a, and correspondingly 34b and 34c, deliver compensation data signal 3472a and clock and data signals 3474a to the digital processing unit 39 and amplitude data 3473a to the RSSI unit 37.

Digital processing unit comprises as customary in the practice, at least one microprocessor or microcontroller unit, at least one of a volatile and a non-volatile memory as well as further units dedicated to data transmission as customary in the field. The RSSI unit 37 comprises a multiplexer 35 receiving the plurality of amplitude signals 3473 from each RF Signal Chain unit 34 and an analog-digital converter (ADC) 36.

According to a further embodiment, the analog-digital converter 36 may comprise a low pass filter (LPF) for ripple attenuation.

According to an embodiment, the system 30 is designed for low-frequency sensor networks, i.e. 20 KHz-140 KHz. According to a further embodiment, a keyfob comprising a system 30 is envisaged within the disclosure of the present application.

Each RF signal chain unit 34a ,34b and 34c is configurable according to a first configuration for generating a Received Signal Strength Indicator (RSSI) value and a second configuration for processing telegram signals. The system comprises a controllable current source (not represented here) to supply a bias current for each RF signal chain unit and more specifically for the amplifying units in said RF signal chain. The current source is controlled by the digital processing unit 39 as follows: When the system is configured in telegram mode (second configuration), the bias current is significantly reduced compared to the RSSI mode (first configuration). Accordingly, the RF signal chain units are shared between the RSSI mode and the telegram mode. This has two major advantages compared to the known solutions: an improvement in the system's energy consumption, as the current is adjusted according to the function; and a gain in the surface of the circuit by sharing hardware resources between the two configurations.

Figure 4 shows a RF Signal Chain unit 34 according to an embodiment of the present disclosure. RF Signal Chain Unit 34 comprises an Automatic Gain Control (AGC) unit 347, wherein the Automatic Gain Control unit 347 comprises an amplifying unit 341 comprising a Low Noise Amplifier (LNA) and a Low Pass Filter (LPF), wherein the amplifying unit is connected to a Variable Gain Amplifier (VGA) 342.

According to a further embodiment, the RF signal chain unit comprises a multi-stage amplifier/attenuator unit, wherein the multi-stage amplifier/attenuator unit is controlled by the Automatic Gain Control Unit. Further, the Automatic Gain Control Unit may be configured to generate an analog amplified signal based on the induced voltage and configured to generate corrected signal levels based on the amplified signal, wherein the Automatic Gain Control Unit is further configured to generate amplitude data. Both the amplifying unit 341 and the VGA unit receive gain data from digital processing unit 39.

According to a further embodiment, gain data comprises at least one of a gain value and an offset value.

RF Signal Chain unit 34 further comprises a compensation unit 343, which delivers the compensation data signal 3472 to the digital processing unit 39. Rectifier 344 process the output of VGA unit 342 and outputs amplitude data 3473 from the VGA unit 342 to the compensation unit 343 as well as to the digital processing unit 39. VGA unit 342 output is as well fed to a carrier recovery unit 345. According to a further embodiment, carrier recovery unit may be represented by a Costas loop unit. Carrier recover unit 345 is then further connected to a clock and data extractor 346, which in turn delivers clock and data signals 3474 to the digital processing unit 39.

According to a specific aspect of the invention, the amplifying unit 341 and the VGA unit 342 are configured together to generate an amplified signal of the induced voltage. The rectifier 344 generates an analog amplitude data 3473 by extracting the envelop of the amplified signal. The compensation unit 343 consists in a comparator configured to detect if the analog amplitude signal 3473 is between a first threshold $V_{th1}$ and a second threshold $V_{th2}$. For example, the comparator 343 outputs a high logic state only when the analog amplitude signal 3473 is between the threshold voltages. If the analog amplitude signal 3473 is higher than the highest threshold voltage, that means that at least one of the amplifiers 341,342 is saturated and that the gain of the amplifying chain should be reduced. If the analog amplitude signal 3473 is lower than the lowest threshold voltage, that means that the gain of the amplifying chain is insufficient and so needs to be increased, this status is called an underperformance status in the context of the invention. The status of saturation (or underperformance) of the amplifying chain 342,341 is provided to the digital processing unit 39 via the compensation data signal 3472. In response, the digital processing unit 39 is configured to calculate a gain value from a prestored database according to the status of saturation (or underperformance) and configured to generate a control signal 3471 to the amplifying unit 341 and/or the VGA unit 342 to adapt its gain to the calculated gain value. In the described embodiment the gain data 3471 provided by the digital processing unit 39 comprises a first component consisting of said control signal depending on the saturation status. Advantageously, the gain calculation in this case can be dichotomic until obtaining an analog amplitude signal 3473 between the two thresholds $V_{th1}$ and $V_{th2}$. The described features allow increasing the accuracy of the RSSI detection by avoiding the erroneous results due to saturation or underperformance of the amplifying chain 341,342 in the RF signal chain unit 34.

The rectifier 344 can present periodic ripple noise according to a first period called ripple period $T_{rp}$. The analog-digital converter (ADC) 36 is configured to sample the analog amplitude signal 3473 according to a sampling period equal to N times the first period $T_{rp}$ with N being an integer. This allows minimizing the ripple effect and so increases the accuracy of the system.

According to a specific aspect of the invention, the system comprises further a thermal detector configured to measure a RSSI unit temperature. The digital processing unit 39 is configured to receive the measured RSSI unit temperature and then determine a gain value and an offset value from the prestored database at the received RSSI unit temperature. Next, the digital processing unit 39 is configured to estimate the signal strength indicator (RSSI) value using the determined gain value, the determined offset value and an average of analog-digital convertor (36) readings. This allows a more precise RSSI calculation by considering the variations of the amplifying chain characteristics (gain and offset) with the temperature. The operation of determining the gain value comprises a linear interpolation operation between a first gain value at a first temperature prestored in the database and a second gain value at a second temperature prestored in the database. The operation of determining the offset value comprises a parabolic interpolation operation between a first ratio offset by gain at a first temperature prestored in the database and a second ratio offset by gain at a second temperature prestored in the database. For example, the first temperature is an ambient temperature, for example between 18°C and 22°C, and the second temperature is relatively high temperature, for example between 65°C and 85°C. The prestored database of the gain and offset variations with temperature is determined by a calibration method performed during production. The calibration method is detailed in a further section of the current description. The interpolation allows avoiding performing measurements at low negative temperatures requiring cooling means while keeping a good accuracy of the gain/offset database. This is a major advantage because the implementation of the cooling operation is complex and costly.

The interpolation operation can be performed by the digital processing unit 39 in real time during functioning reducing the memory requirements for storing the gain/offset dependence as a function of temperature.

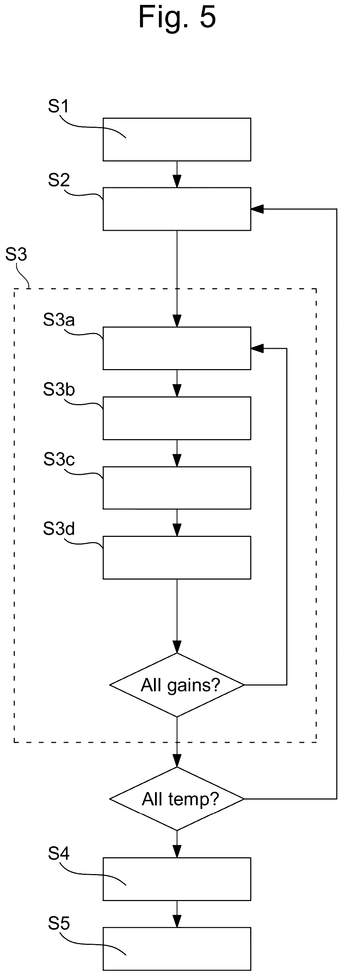

The calibration method according to an embodiment of the current disclosure will be described below with reference to Figure 5. In order to improve the RSSI accuracy, the process is to measure RSSI gains and offsets in production time and use them to correct the gain and offset variation over temperature. Since the calibration procedure described below is done without any antenna attached, the input capacitance of the receiver front-end is designed such that its value is effectively fix and has minimal dependence on the gain code of the receiver and the input level.

The first step S1 denotes the start of the calibration method according to an embodiment of the current disclosure. In this step, the temperature list and gain decoding list required for the calibration may be generated, wherein the temperature list data is configured to span operating temperatures of the RSSI unit 37. Correspondingly, the gain decoding list data comprises the nominal gain values spanning from the operation values used in the RF Signal Chain Unit 34 and predetermined during design of the integrated circuit in nominal conditions. In a further embodiment, the temperature list data comprises temperature data spanning from -40 °C to 80 °C with a predefined calibration temperature or temperature step sizes of 20 °C, preferably 10 °C or more specifically 5 °C. It is meant by nominal condition, the typical values defined during circuit design regarding supply voltage, temperature and process parameters for transistors.

In the second step S2, a temperature from the temperature list is selected and the RSSI unit is set to the selected temperature. According to a further embodiment, setting the RSSI unit to the selected temperature comprises at least one of setting a room temperature and a test chamber temperature or any heating means compatibles with an integrated circuit.

The third step S3 consists in performing the following operations for each nominal gain from the gain list at the selected temperature:

A first sub-step S3a consists in applying at least two input RF signals to the RF antenna 31. The input RF signals must have an amplitude enabling an analog amplitude signal 3473 between a first threshold $V_{th1}$ and a second threshold $V_{th2}$. The two input RF signals are applied sequentially to determine the response on each input Rf signal.

The second sub-step S3b consists in measuring the analog amplitude signal 3473 after the application of each input signal.

The third sub-step S3c consists in extrapolating a linear variation of the analog amplitude signal 3473 function of input RF signals amplitude to determine an estimated gain value and an estimated offset value. The estimated gain value results from the variation of the nominal gain value at the selected temperature. The estimated gain value corresponds to the slope of the extrapolated linear function, and the estimated offset corresponds to the ordinate at the origin of said extrapolated linear function.

The fourth sub-step S3d consists in storing the estimated gain value and the estimated offset in association with the corresponding selected nominal gain and the selected temperature.

The sub-steps S3a to S3d are reiterated for all the temperatures and nominal gains of the initial lists.

Advantageously, the method further comprises an interpolation step S4 by processing the stored estimated gain values in order to determine for each nominal gain, the gain variation with temperature. Accordingly, for each nominal gain, a linear interpolation from at least two estimated gain points at different temperature is performed. A linear function gain=f(temperature) is calculated and stored for each nominal gain over a temperature range (for example between -40°C and 85°C) without the need of testing at sub-zero temperatures.

Advantageously, the method further comprises an interpolation step S5 by processing the stored estimated offset values in order to determine for each nominal gain, the offset variation with temperature. The interpolation is based on the following parameters and assumptions:

- A first estimated value of the gain and the offset at a first temperature from the previous steps of the calibration method;
- A second estimated value of the gain and the offset at a temperature from the previous steps of the calibration method;
- The ratio offset divided by the gain varies according to a parabolic function with temperature;
- The derivative of the parabola is zero at a temperature between - 30°C and -40°C, for example at -35°C.

Accordingly, for each nominal gain, a parabolic interpolation from at least two estimated (gain, offset) points at different temperature is performed. The parabolic interpolation is calculated and stored for each nominal gain over a temperature range (for example between -40°C and 85°C) without the need of testing at sub-zero temperatures.

More calculating details are given for the linear and parabolic interpolations.

For the linear interpolation, when two temperature points are determined, determining the gain fitting over temperature comprises assuming that the curve is linear and a linear interpolation between two points is carried out.

$$y = ax + b$$

$$a = \frac{y_1 - y_2}{x_1 - x_2}$$

$$b = \frac{y_2 x_1 - y_1 x_2}{x_1 - x_2}$$

wherein y denotes gain and x denotes temperature.

In a further embodiment, three temperature points are determined, and determining the gain fitting over temperature comprises assuming that the curve is linear and a linear interpolation between three points is carried out.

$$y = ax + b$$

$$detM = 3(x_1^2 + x_2^2 + x_3^2) - (x_1 + x_2 + x_3)^2$$

$$a = \frac{3(x_1 y_1 + x_2 y_2 + x_3 y_3) - (x_1 + x_2 + x_3)(y_1 + y_2 + y_3)}{detM}$$

$$b = \frac{(x_1^2 + x_2^2 + x_3^2)(y_1 + y_2 + y_3) - (x_1 + x_2 + x_3)(x_1 y_1 + x_2 y_2 + x_3 y_3)}{detM}$$

wherein y denotes gain and x denotes temperature again.

In a further embodiment, determining a gain and an offset value comprises fitting a parabola due to the input offset curves shapes. This can be done according to two further embodiments explained below.

According to the first further embodiment, Interpolation is done through two points with a further extra condition. According to a further embodiment, the extra condition is setting a point with zero derivative at a predetermined temperature between -30 °C and -40°C (e.g. at -35 °C). Following this embodiment, the equations described above are modified to read as follows, with y=offset/gain and x being the temperature :

$$y = ax^2 + bx + c$$

The zero derivative condition imposes the condition:

$$b = -2ma$$

And therefore the equations can be simplified as:

$$y = a(x^2 - 2mx) + c$$

The coefficients can then be determined as follows:

$$a = \frac{y_1 - y_2}{(x_1 - x_2)(x_1 + x_2 - 2m)}$$

$$c = \frac{y_2 x_1 (x_1 - 2m) - y_1 x_2 (x_2 - 2m)}{(x_1 - x_2)(x_1 + x_2 - 2m)}$$

According to the second further embodiment, if three points are to be determined at calibration time, the equations set up above can be modified as follows. Following the above consideration of the input offset curves, they are assumed to fit based on three points to find its coefficients the three coefficients of the parabola can be determined as follows:

$$detM = x_1^2 (x_2 - x_3) - x_1 (x_2 - x_3)(x_2 + x_3) + x_2 x_3 (x_2 - x_3)$$

$$a = \frac{y_1 (x_2 - x_3) + y_2 (x_3 - x_1) + y_3 (x_1 - x_2)}{detM}$$

$$b = \frac{y_1 (x_3^2 - x_2^2) + y_2 (x_1^2 - x_3^2) + y_3 (x_2^2 - x_1^2)}{detM}$$

$$c = \frac{y_1 x_2 x_3 (x_2 - x_3) + y_2 x_1 x_3 (x_3 - x_1) + y_3 x_1 x_2 (x_1 - x_2)}{detM}$$

The linear and parabolic interpolation operations were described for the calibration method. Alternatively, the linear and parabolic interpolation can be run during functioning of the system to determine the gain and offset from the database containing the estimated points (gain,offset) for at least two temperatures and for each nominal gain. This provides a substantial advantage consisting of a significant reduction of the amount of data stored to regulate the gains with the temperature.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard electronic hardware to execute the code contained therein.

**Claims**

1. System (30) for generating a signal strength indicator (RSSI) value of a received radio frequency (RF) signal, said system comprising:

   - an RF antenna (31) configured to generate an induced voltage from the received radio frequency (RF) signal;
   - an RF signal chain unit (34) comprising an automatic gain control unit (347) configured to generate an analog amplitude signal (3473) derived from the induced voltage; said automatic gain control unit (347) comprising:

     ○ at least an amplifying unit (341, 342) with a controllable gain configured to amplify the induced voltage;
     ○ a compensation unit (343) configured to determine a status of saturation or underperformance of the at least amplifying unit (341, 342);

   - a digital processing unit (39) configured to calculate a gain value from a prestored database according to the status of saturation or underperformance of the at least amplifying unit (341,342) and configured to generate a control signal to the at least amplifying unit (341, 342) to adapt its gain to the calculated gain value;
   - a Received Signal Strength Indicator (RSSI) unit (37) configured to receive the analog amplitude signal (3473) and to generate a RSSI value based on the analog amplitude signal (3473).

2. System according to claim 1, wherein the system comprises a plurality of RF Receivers, wherein each RF receiver comprises a RF antenna (31a, 31b, 31c), and wherein each RF antenna is connected to a dedicated RF signal chain unit (34a, 34b, 34c), and wherein the Received Signal Strength Indicator (RSSI) unit (37) comprises a multiplexer (35) configured to receive each analog amplitude signal (3473) generated by the each RF signal chain unit (34a, 34b, 34c).

3. System according to any one of claims 1 or 2 having a first configuration for generating a signal strength indicator (RSSI) value and a second configuration for processing telegram signals ; said system comprising a controllable current source to supply a bias current for the at least amplifying unit (341, 342) ; the current source being configurable by the digital processing unit (39) according to the selected configuration such as when the second configuration is selected the bias current is reduced compared to the first configuration.

4. System according to any one of claims 1 to 3 wherein the compensation unit (343) is a comparator configured to detect if the analog amplitude signal (3473) is between a first threshold ($V_{th1}$) and a second threshold ($V_{th2}$).

5. System according to any one of claims 1 to 4 wherein the automatic gain control unit (347) comprises a rectifier (344) configured to extract the envelop of the output signal of the at least an amplifying unit (342) to generate the analog amplitude signal (3473).

6. System according to claim 5 wherein said rectifier (344) generates periodic ripple noise at a first period; and wherein the Received Signal Strength Indicator (RSSI) unit (37) comprises an analog-digital convertor (36) configured to sample the analog amplitude signal (3473) according to a sampling period equal to N times the first period ; N being an integer.

7. System according to any one of claims 1 to 6, comprising further a thermal detector configured to measure a RSSI unit temperature; and wherein the digital processing unit (39) being configured to:

   - receive the RSSI unit temperature;
   - determine a gain value and an offset value from the prestored database at the received RSSI unit temperature;
   - estimate the signal strength indicator (RSSI) value using the determined gain value; the determined offset value and an average of analog-digital convertor (36) readings.

8. System according to claim 7, wherein determining the gain value comprises a linear interpolation operation between a first gain value at a first temperature prestored in the database and a second gain value at a second temperature prestored in the database; the second temperature being higher than the first temperature.

9. System according to claim 7, wherein determining the offset value comprises a parabolic interpolation operation between a first ratio offset by gain at a first temperature prestored in the database and a second ratio offset by gain at a second temperature prestored in the database; the second temperature being higher than the first temperature.

10. Method of calibration of a system according to claim 1 , wherein the method comprises:

- generating a temperature list comprising a plurality of temperature values and a gain decoding list comprising a plurality of nominal gain values;
- selecting a temperature from the temperature list and setting the RSSI unit (37) to the selected temperature and selecting a gain from the gain decoding list;
- wherein for each temperature value and for each nominal gain value the method further comprises:

  • applying at least two input RF signals to the RF antenna (31); each of the input RF signals having an amplitude enabling an analog amplitude signal (3473) between a first threshold ($V_{th1}$) and a second threshold ($V_{th2}$);
  • for each input RF signal, measuring the analog amplitude signal (3473);
  • extrapolating a linear variation of the analog amplitude signal (3473) function of input RF signals amplitude to determine an estimated gain value and an estimated offset value;
  • storing the estimated gain value and the estimated value ;

11. Method of calibration according to claim 10, further comprising the following step for a predetermined nominal gain value:

- performing a linear fitting operation between a first estimated gain value at a first temperature and a second estimated gain value at a second temperature; the second temperature being higher than the first temperature.
- storing the obtained linear function for a predetermined temperature range to obtain temperature compensated gain database.

12. Method of calibration according to claim 10, further comprising the following step for a predetermined nominal gain value:

- performing a parabolic fitting operation between a first estimated ratio offset by gain at a first temperature and a second estimated ratio offset by gain at a second temperature; the second temperature being higher than the first temperature.
- storing the obtained parabolic function for a predetermined temperature range to obtain temperature compensated offset database.

13. Method of calibration according to claim 12 wherein the parabolic fitting operation is based on in that the derivative of the ratio with respect to temperature is equal to 0 at a temperature between -30°C and -40°C.

14. Method of calibration according to any one of claims 10 to 12 wherein the temperature list consists of a first temperature between 18°C and 28°C and a second temperature higher than the first temperature.

## Fig. 1

## Fig. 2

Fig. 3

39 39a 37 36 35

3472a 3471a 3473a 3474a

34a 34b 34c

33a 33b 33c

32a 32b 32c

31a 31b 31c

30

Fig. 4

# Fig. 5

**EUROPEAN SEARCH REPORT**

Application Number

EP 26 15 0588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/289931 A1 (MENDEL STEFAN [AT] ET AL) 5 October 2017 (2017-10-05) | 1,4,8,9 | INV. H04B17/21 |
| Y | * paragraph [0045] - paragraph [0082]; | 2,5-7 | |
| A | figures 1-14 * | 3,10-14 | ADD. H04B17/318 |
| | ----- | | |
| A | US 2005/059367 A1 (KIM HEA JOUNG [US]) 17 March 2005 (2005-03-17) * the whole document * | 1-14 | |
| | ----- | | |
| Y | US 2010/311453 A1 (NISSAN-COHEN YOAV [IL] ET AL) 9 December 2010 (2010-12-09) * paragraph [0090] - paragraph [0109]; figure 2 * | 2 | |
| | ----- | | |
| A | US 2001/029172 A1 (LEE WOO-YONG [KR] ET AL) 11 October 2001 (2001-10-11) * the whole document * | 3 | |
| | ----- | | |
| Y | CHEN WEI-ZEN ET AL: "A 160-GHz Frequency-Translation Phase-Locked Loop With RSSI Assisted Frequency Acquisition", IEEE TRANSACTIONS ON CIRCUITS AND SYSTEMS I: REGULAR PAPERS IEEE, US, vol. 61, no. 6, 1 June 2014 (2014-06-01), pages 1648-1655, XP011549247, ISSN: 1549-8328, DOI: 10.1109/TCSI.2013.2295016 [retrieved on 2014-05-23] * the whole document * | 5,6 | TECHNICAL FIELDS SEARCHED (IPC)  H04B |
| | ----- | | |
| Y | US 2005/073450 A1 (KIM SEUNG-HWAN [KR] ET AL) 7 April 2005 (2005-04-07) * paragraph [0006] - paragraph [0027]; figure 3 * | 7 | |
| | ----- | | |

The present search report has been drawn up for all claims

| Place of search | Date of completion of the search | Examiner |
|---|---|---|
| The Hague | 29 April 2026 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 776 532 A1

## ANNEX TO THE EUROPEAN SEARCH REPORT
## ON EUROPEAN PATENT APPLICATION NO.

EP 26 15 0588

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2026

| Patent document cited in search report | | Publication date | Patent family member(s) | | Publication date |
|---|---|---|---|---|---|
| US 2017289931 | A1 | 05-10-2017 | NONE | | |
| US 2005059367 | A1 | 17-03-2005 | US | 2004064281 A1 | 01-04-2004 |
| | | | US | 2005059367 A1 | 17-03-2005 |
| US 2010311453 | A1 | 09-12-2010 | US | 2010311453 A1 | 09-12-2010 |
| | | | WO | 2009090649 A2 | 23-07-2009 |
| US 2001029172 | A1 | 11-10-2001 | NONE | | |
| US 2005073450 | A1 | 07-04-2005 | KR | 20050032810 A | 08-04-2005 |
| | | | US | 2005073450 A1 | 07-04-2005 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017288795 A1